(19) **Europäisches Patentamt**
**European Patent Office**
**Office européen des brevets**

(11)  **EP 3 470 986 B1**

(12)  **FASCICULE DE BREVET EUROPEEN**

(45) Date de publication et mention
de la délivrance du brevet:
**15.04.2020   Bulletin 2020/16**

(51) Int Cl.:
**G06F 11/07** (2006.01)       **G06F 11/30** (2006.01)
**G06F 11/34** (2006.01)

(21) Numéro de dépôt: **18199926.9**

(22) Date de dépôt: **11.10.2018**

(54) **PROCÉDÉ ET DISPOSITIF DE SURVEILLANCE D'UNE APPLICATION LOGICIELLE AVIONIQUE VIA SA DURÉE D'EXÉCUTION, PROGRAMME D'ORDINATEUR ET SYSTÈME AVIONIQUE ASSOCIÉS**

VERFAHREN UND VORRICHTUNG ZUR ÜBERWACHUNG EINER SOFTWAREANWENDUNG FÜR LUFTFAHRZEUGE ÜBER IHRE AUSFÜHRUNGSZEIT, ENTSPRECHENDE SOFTWARE UND ENTSPRECHENDES FLUGZEUGSYSTEM

METHOD AND DEVICE FOR MONITORING AN AVIONICS SOFTWARE APPLICATION BY MEANS OF ITS EXECUTION TIME, ASSOCIATED COMPUTER PROGRAM AND AVIONICS SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2017   FR 1701055**

(43) Date de publication de la demande:
**17.04.2019   Bulletin 2019/16**

(73) Titulaire: **Thales**
**92400 Courbevoie (FR)**

(72) Inventeurs:
• **FUMEY, Marc**
**33700 MERIGNAC (FR)**

• **BOSSON, Joël Henri René**
**33700 MERIGNAC (FR)**
• **AEGERTER, Tarik**
**33700 MERIGNAC (FR)**
• **MEYER, Yves**
**33700 MERIGNAC (FR)**
• **LACQUIT, Hubert**
**33700 MERIGNAC (FR)**

(74) Mandataire: **Lavoix**
**2, place d'Estienne d'Orves**
**75441 Paris Cedex 09 (FR)**

(56) Documents cités:
**EP-A1- 2 133 793        WO-A1-2015/173532**
**WO-A1-2017/024371    US-A1- 2003 037 172**

**Description**

La présente invention concerne un procédé de surveillance d'une application logicielle avionique apte à être exécutée sur une plateforme hébergeant un système d'exploitation, l'application logicielle avionique comportant un ou plusieurs traitements logiciels à exécuter, la plateforme étant destinée à être embarquée à bord d'un aéronef, le procédé étant mis en œuvre par un dispositif électronique de surveillance.

L'invention concerne également un programme d'ordinateur comportant des instructions logicielles qui, lorsqu'elles sont exécutées par un ordinateur, mettent en œuvre un tel procédé.

L'invention concerne également un dispositif électronique de surveillance d'une application logicielle avionique apte à être exécutée sur une plateforme hébergeant un système d'exploitation, l'application logicielle avionique comportant un ou plusieurs traitements logiciels à exécuter, la plateforme étant destinée à être embarquée à bord d'un aéronef.

L'invention concerne également un système électronique avionique comprenant une mémoire apte à stocker au moins une application logicielle avionique ; une plateforme apte à exécuter chaque application logicielle avionique, la plateforme hébergeant un système d'exploitation ; et un tel dispositif électronique de surveillance de chaque application logicielle avionique.

L'invention concerne le domaine de la qualification des plateformes avioniques embarquées, en particulier de la surveillance du fonctionnement des applications logicielles exécutées sur de telles plateformes avioniques embarquées, notamment pour des plateformes avioniques comportant un ou plusieurs processeurs multi-cœurs. La surveillance est par exemple une surveillance de type Safety Net.

WO 2017/024371 A1 et WO 2015/173532 A1 concernent chacun un procédé de surveillance d'une application logicielle avionique apte à être exécutée sur une plateforme hébergeant un système d'exploitation et embarquée à bord d'un aéronef.

L'utilisation de processeurs multi-cœurs apporte une difficulté importante pour la qualification des plateformes. En effet, l'exécution simultanée de plusieurs logiciels sur un même processeur s'accompagne de risques de contentions à cause du partage de ressources communes (bus, mémoire), sans que le comportement du processeur, notamment lorsqu'il est multi-cœurs, puisse être facilement maitrisé.

Le terme « contention » désigne toute situation dans laquelle au moins une activité menée par au moins un cœur d'un processeur multi-cœurs subit des retards dans son exécution à cause du parallélisme temporel permis par ce processeur multi-cœurs.

L'origine des contentions est généralement l'usage de ressources communes du processeur ou du système d'exploitation, également appelé OS (de l'anglais *Operating System)* aboutissant à des attentes générant ces retards. L'effet d'une contention est alors un retard sur l'exécution d'une application logicielle hébergée sur un cœur.

Un premier exemple de contention est le bus (appelé souvent « *interconnect* ») reliant les cœurs les uns aux autres qui ne permet pas toujours des transactions simultanées entre cœurs ou entre les cœurs et les périphériques, tels que certaines mémoires cache intégrées ou la mémoire externe.

Un autre exemple de contention est l'usage de modules logiciels communs de l'OS installés sur un des cœurs et appelés par l'ensemble de cœurs, potentiellement simultanément. Des appels simultanés à de tels modules logiciels communs provoquent un arbitrage et une mise en attente de certaines demandes afin de sérialiser les traitements logiciels sur le cœur où le module logiciel commun est installé.

Un autre exemple de contention est une interruption momentanée de tous les cœurs sur évènement particulier sur un des cœurs afin de gérer un statut cohérent entre tous les cœurs.

Lorsque le processeur est en outre un processeur acheté auprès d'un fournisseur, ou processeur COTS (de l'anglais *Commercial Off-The-Shelf),* il est généralement impossible d'avoir accès au détail de conception des organes internes d'un tel processeur multi-cœurs, et il est donc très difficile, voire impossible de garantir un comportement déterministe du processeur.

Le but de l'invention est alors de proposer un procédé et un dispositif de surveillance d'une application logicielle avionique apte à être exécutée sur une plateforme avionique, qui permette de surveiller plus efficacement l'application logicielle.

A cet effet, l'invention a pour objet un procédé de surveillance d'une application logicielle avionique, selon la revendication 1.

Avec le procédé de surveillance selon l'invention, la surveillance de la durée d'exécution de l'application logicielle avionique permet alors de détecter un dysfonctionnement de l'application logicielle avionique, correspondant à une situation de contention de l'application logicielle avionique, ou encore à une situation « hors sécurité » impliquant un risque de sécurité de fonctionnement.

Suivant un autre aspect avantageux de l'invention, le procédé de surveillance est selon la revendication 2.

L'invention a pour objet un procédé de surveillance d'une application logicielle avionique, selon la revendication 3.

Suivant d'autres aspects avantageux de l'invention, le procédé de surveillance est selon l'une quelconque des revendications 4 à 6.

Avec le procédé de surveillance selon un deuxième mode de réalisation de l'invention, la surveillance à la fois de la durée d'exécution de l'application logicielle avionique et du comportement de l'application logicielle avionique permet alors de détecter un dysfonctionnement de l'application logicielle avionique, correspondant à une situation de contention de l'application logicielle avionique, à une situation « hors sécurité » impliquant un risque de sécurité de fonctionnement, ou encore à une situation « hors contrôle » où l'application logicielle avionique est considérée comme devenue folle.

L'invention a également pour objet un programme d'ordinateur selon la revendication 7.

L'invention a également pour objet un dispositif électronique de surveillance d'une application logicielle avionique, selon la revendication 8 ou 9.

L'invention a également pour objet un système électronique avionique selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un système électronique avionique selon l'invention, comprenant une mémoire apte à stocker au moins une application logicielle avionique ; une plateforme apte à exécuter chaque application logicielle avionique, la plateforme comportant des ressources et hébergeant un système d'exploitation ; et un dispositif électronique de surveillance d'une application logicielle avionique ; et
- la figure 2 est un organigramme d'un procédé, selon l'invention, de surveillance d'une application logicielle avionique apte à être exécutée sur la plateforme, le procédé étant mis en œuvre par le dispositif de surveillance de la figure 1 ;
- la figure 3 est un logigramme du procédé de surveillance, selon un premier mode de réalisation de l'invention ; et
- la figure 4 est une vue analogue à celle de la figure 3, selon un deuxième mode de réalisation de l'invention.

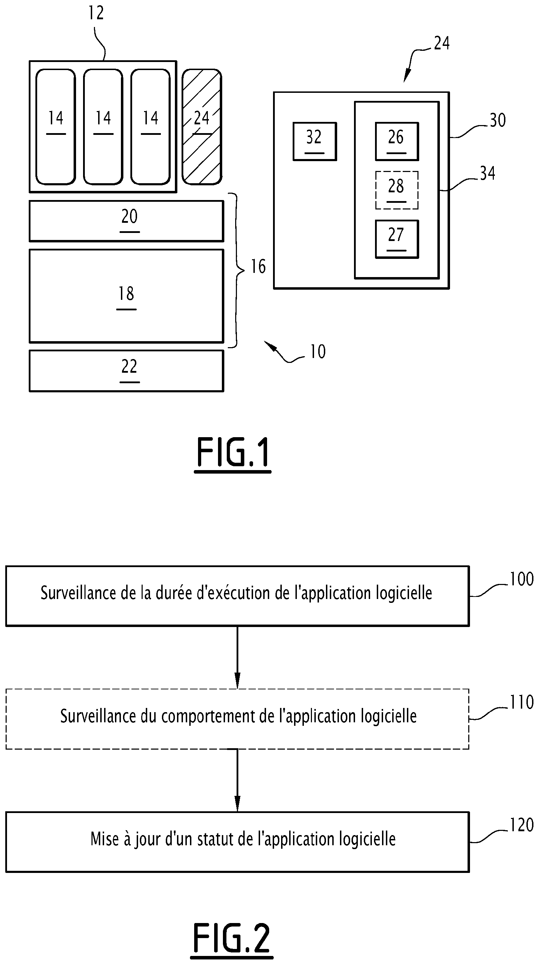

Sur la figure 1, un système électronique avionique 10, destiné à être embarqué à bord d'un aéronef, comprend une mémoire 12 apte à stocker au moins une application logicielle avionique 14 ; une plateforme 16 apte à exécuter chaque application logicielle avionique 14, la plateforme 16 comportant des ressources 18 et hébergeant un système d'exploitation 20, la plateforme 16 étant reliée d'autres systèmes électroniques avioniques 22 de l'aéronef.

Le système électronique avionique 10 comprend en outre, selon l'invention, un dispositif électronique 24 de surveillance d'une application logicielle avionique 14.

Sur la figure 1, par souci de simplification du dessin, la mémoire 12 a été représentée à l'extérieur du rectangle symbolisant les ressources 18, ceci afin de faire apparaitre de manière distincte la couche logicielle correspondant aux applications logicielles 14, ainsi que le cas échéant au dispositif de surveillance 24. Néanmoins, l'homme du métier comprendra bien entendu que la mémoire 12 est incluse dans les ressources 18 de la plateforme 16.

L'aéronef est de préférence un avion. En variante, l'aéronef est un hélicoptère, ou encore un drone piloté à distance par un pilote.

Dans l'exemple de la figure 1, la mémoire 12 est apte à stocker trois applications logicielles avioniques 14 distinctes, et le dispositif électronique de surveillance 24 est alors configuré pour surveiller au moins une application logicielle avionique 14, et de préférence chacune de ces applications logicielles avioniques 14.

Chaque application logicielle avionique 14 est destinée à être exécutée par la plateforme 16 et alors conçue pour émettre un ou plusieurs appels à destination du système d'exploitation 20 hébergé par la plateforme 16 et est également configurée pour utiliser des ressources 18 de la plateforme 16. Chaque application logicielle avionique 14 comporte un ou plusieurs traitements logiciels à exécuter.

Chaque application logicielle avionique 14 est également appelée fonction avionique. Les applications logicielles avioniques 14 remplissent différentes fonctions pour l'accomplissement d'un vol, et sont par exemple installées sur différentes plateformes 16 et utilisent les ressources 18 desdites plateformes 16.

Chaque application logicielle avionique 14 exécute des traitements logiciels. Un traitement logiciel désigne un ensemble d'opérations sur des données de l'application logicielle avionique 14 permettant de réaliser des parties d'une fonction avionique, telles qu'une acquisition ou une émission de données, des calculs mathématiques, des traitements logiques, une manipulation de données.

Chaque traitement logiciel est également appelé processus, ou encore processus logiciel. Un traitement logiciel est par exemple un processus au sens de la norme ARINC 653.

De telles fonctions étant critiques, comme par exemple le système de freinage ou le système de gestion du vol, chaque application logicielle avionique 14 est de préférence surveillée régulièrement par le dispositif électronique de surveillance 24, pendant sensiblement toute la durée d'exécution de l'application logicielle avionique 14 par la plateforme 16.

La plateforme 16 est destinée à être embarquée à bord de l'aéronef. La plateforme 16 est, par exemple, une unité de traitement d'informations formée d'une ou plusieurs mémoires associées à un ou plusieurs processeurs.

Les ressources 18 de la plateforme 16 sont des éléments physiques ou logiques propres à être mis à disposition de la ou des applications logicielles avioniques 14.

Les ressources 18 sont, par exemple, réparties en les catégories suivantes : ressources de type traitement de données (en anglais « *processing* »), telles qu'un ou plusieurs processeurs ; les ressources de type mémoire ; les ressources de type entrées et sorties ; ressources spécifiques au réseau avionique, telles que des routeurs de communication d'un réseau ARINC664 ; les ressources de type graphique, c'est-à-dire permettant un affichage de données ; et ressources de type mémoire de masse (en anglais « *mass memory* »).

Le système d'exploitation 20 est, par exemple, un système d'exploitation conforme à la norme ARINC 653, ou un système d'exploitation POSIX, ou encore un hyperviseur, ou encore un middleware. L'homme du métier comprendra alors que le système d'exploitation 20 s'entend au sens large, et est, de manière plus générale, un ensemble d'au moins un logiciel de base, conçu pour offrir des services de différents types à chaque application 14.

Le dispositif électronique de surveillance 24 est configuré pour surveiller au moins une application logicielle avionique 14 apte à être exécutée sur la plateforme 16, et comprend un premier module de surveillance 26 configuré pour surveiller la durée d'exécution de l'application logicielle avionique 14.

Le dispositif électronique de surveillance 24 comprend un module de mise à jour 27 configuré pour mettre à jour un statut de l'application logicielle avionique 14 en fonction de la surveillance de la durée d'exécution de l'application logicielle avionique 14.

Selon un deuxième mode de réalisation de l'invention, le dispositif électronique de surveillance 24 comprend en outre un deuxième module de surveillance 28 configuré pour surveiller le comportement de l'application logicielle avionique 14, via la vérification, à l'expiration d'un délai de surveillance prédéfini Tf, de la détection d'au moins un évènement applicatif de l'application logicielle avionique. La mise à jour du statut de l'application logicielle avionique par le module de mise à jour 27 dépend alors de la surveillance de la durée d'exécution et de la surveillance du comportement de l'application logicielle avionique.

Dans l'exemple de la figure 1, le dispositif de surveillance 24 est, par exemple distinct de la plateforme 16, et comprend une unité de traitement d'informations 30 formée par exemple d'un processeur 32 associé à une mémoire 34.

En variante, pour laquelle le dispositif de surveillance 24 est représenté en trait hachuré sur la figure 1, le dispositif de surveillance 24 est apte à être exécuté directement par la plateforme 16 et à utiliser alors ses ressources 18. Cette variante est un mode de réalisation préférentiel, et le dispositif de surveillance 24 est alors de préférence hébergé en outre dans le système d'exploitation 20 ou bien au sein d'une partition mémoire spécifique de la plateforme 16, cette partition spécifique étant elle-même protégée contre des cyber-attaques, via par exemple un ou plusieurs contrôles d'accès et/ou une protection en intégrité.

Dans l'exemple de la figure 1, que le dispositif de surveillance 24 soit distinct de la plateforme 16, ou bien hébergé et exécuté par la plateforme 16, le premier module de surveillance 26 et le module de mise à jour 27, ainsi qu'en complément facultatif le deuxième module de surveillance 28, sont réalisés chacun sous forme d'un logiciel, ou d'une brique logicielle, exécutable par un processeur, tel que le processeur 32 lorsque le dispositif de surveillance 24 est distinct de la plateforme 16. La mémoire 34 du dispositif de surveillance 24 est alors apte à stocker un premier logiciel de surveillance adapté pour surveiller la durée d'exécution de l'application logicielle avionique 14 et un logiciel de mise à jour adapté pour mettre à jour le statut de l'application logicielle avionique 14 en fonction de la surveillance de la durée d'exécution de l'application logicielle avionique 14. En complément facultatif, la mémoire 34 du dispositif de surveillance 24 est également apte à stocker un deuxième logiciel de surveillance adapté pour surveiller le comportement de l'application logicielle avionique 14, la mise à jour du statut dépendant alors de la surveillance de la durée d'exécution et de la surveillance du comportement de l'application logicielle avionique. Le processeur est alors apte à exécuter le premier logiciel de surveillance et le logiciel de mise à jour, ainsi qu'en complément facultatif le deuxième logiciel de surveillance.

En variante non représentée, le premier module de surveillance 26 et le module de mise à jour 27, ainsi qu'en complément facultatif le deuxième module de surveillance 28, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif de surveillance 24 est réalisé sous forme d'un ou plusieurs logiciels, c'est-à-dire en forme d'un programme d'ordinateur, il est en outre apte à être enregistré sur un support, non représenté, lisible par ordinateur. Le support lisible par ordinateur est, par exemple, un médium adapté à mémoriser des instructions électroniques et capable d'être couplé à un bus d'un système informatique. A titre d'exemple, le support lisible est une disquette ou disque souple, (de la dénomination anglaise *Floppy disk*), un disque optique, un CD-ROM, un disque magnéto-optique, une mémoire ROM, une mémoire RAM, tout type de mémoire non volatile (par exemple, EPROM, EEPROM, FLASH, NVRAM) une carte magnétique ou une carte optique. Sur le support lisible est alors mémorisé un programme d'ordinateur comprenant des instructions logicielles.

Le premier module de surveillance 26 est configuré pour surveiller la durée d'exécution de l'application logicielle avionique 14, via la vérification, à l'expiration d'au moins un délai d'exécution prédéfini T1, T2, de l'achèvement de l'exécution d'au moins un traitement logiciel de l'application logicielle avionique 14.

Le premier module de surveillance 26 est de préférence configuré pour surveiller la durée d'exécution de l'application logicielle avionique 14 au regard de deux délais d'exécution prédéfinis distincts, à savoir un premier délai d'exécution prédéfini T1 et un deuxième délai d'exécution prédéfini T2, supérieur au premier délai d'exécution T1. Le premier module de surveillance 26 est configuré pour surveiller la durée d'exécution de l'application logicielle avionique 14, via la vérification, à l'expiration du premier délai d'exécution prédéfini T1, puis à l'expiration du deuxième délai d'exécution prédéfini T2, de l'achèvement de l'exécution d'au moins un traitement logiciel de l'application logicielle avionique 14.

La surveillance de la durée d'exécution de l'application logicielle avionique 14 est une surveillance de l'application logicielle avionique 14 dans son ensemble ou bien d'un ou plusieurs traitements logiciels de cette application logicielle avionique 14, tels que des processus selon la norme ARINC 653. Dans le cas d'une surveillance de la durée d'exécution de l'application logicielle avionique 14 dans son ensemble, le premier délai d'exécution prédéfini T1 est par exemple déduit directement du WCET (de l'anglais *Worst Case Execution Time*) établi lors d'une qualification de l'application logicielle avionique 14. Dans le cas d'une surveillance de la durée d'exécution d'un ou plusieurs traitements logiciels de l'application logicielle avionique 14, le premier délai d'exécution prédéfini T1 est établi en fonction de durées de pire cas d'exécution dudit ou desdits traitements logiciels, en tenant compte des cumuls éventuels de durées d'exécution.

La connaissance de ce premier délai d'exécution prédéfini T1 par le dispositif de surveillance 24 se fait, soit par configuration associée à l'application logicielle avionique 14, soit à l'initialisation de l'application logicielle avionique 14.

Dans l'exemple d'une plateforme 16 conforme à la norme ARINC 653, la durée d'exécution de chaque processus de l'application logicielle avionique 14 est apte à être surveillée, et un premier délai d'exécution T1 est alors prédéfini pour chaque processus. Le premier délai d'exécution T1 correspond alors à la durée à partir de laquelle le processus doit être achevé du point de vue du temps maximum d'exécution.

La détection de l'achèvement de l'exécution de chaque traitement logiciel de l'application logicielle avionique 14 est effectuée par exemple directement via un mécanisme de date limite (de l'anglais *deadline*) offert pour les processus par le système d'exploitation 20 lorsqu'il est conforme à la norme ARINC 653. En variante, la détection de l'achèvement de l'exécution de chaque traitement logiciel est effectuée via une trace de fin d'exécution fournie par l'application logicielle avionique 14, typiquement via un port dédié dont le système d'exploitation 20 surveille la génération à l'expiration du premier délai d'exécution prédéfini T1.

Des exemples de valeurs des premier et deuxième délais d'exécution T1 et T2 sont indiqués ci-après dans l'exemple d'un processeur où sont installées différentes applications logicielles avioniques 14 et pour lequel un cycle temps réel de 50 ms est défini. Lors d'une période de 50 ms, une allocation de 15 ms est faite pour une de ces applications logicielles avioniques 14 ayant défini un temps d'exécution de pire cas de 8 ms. Dans ces conditions, le premier délai d'exécution T1 est par exemple choisi égal à 8 ms et le deuxième délai d'exécution T2 choisi égal à 15 ms (ou entre 8 ms et 15 ms en fonction de l'analyse de la sécurité de l'application logicielle avionique 14 correspondante).

Selon le deuxième mode de réalisation de l'invention, le deuxième module de surveillance 28 est configuré pour surveiller le comportement de l'application logicielle avionique 14, via la vérification, à l'expiration d'un délai de surveillance prédéfini Tf, de la détection d'au moins un évènement applicatif de l'application logicielle avionique.

Selon ce deuxième mode de réalisation, le module de mise à jour 27 est alors configuré pour mettre à jour le statut de l'application logicielle avionique 14 en fonction à la fois de la surveillance de la durée d'exécution et de la surveillance du comportement de l'application logicielle avionique.

Par évènement applicatif, on entend un évènement renseignant sur l'état de l'application logicielle avionique 14, l'évènement étant alors qualifié d'applicatif, un évènement étant de manière général quelque chose d'observable à un instant donné sur la plateforme 16. A titre d'exemple, un évènement est par exemple le fait que les processus selon la norme ARINC 653 de l'application sont terminés avant le délai de surveillance prédéfini Tf, ou encore le fait que l'application logicielle avionique 14 a exécuté une tâche de surveillance particulière et donné une réponse adéquate. Un évènement applicatif dans le cadre de la surveillance du comportement est considéré comme étant naturel, par exemple en cas de fourniture par l'application logicielle avionique 14 de données à des instants connus, ou bien contraint, par exemple en cas d'ajout d'activités permettant de construire une preuve de bonne santé de l'application logicielle avionique 14, typiquement en plaçant au cours de l'exécution de l'application logicielle avionique 14 des calculs dont le résultat est connu afin de vérifier la bonne exécution de l'application logicielle avionique 14 à la fin de son temps imparti.

La détermination du délai de surveillance prédéfini Tf dépend par exemple d'analyses de partitionnement et d'une caractérisation faite sur le processeur correspondant de la plateforme 16, le délai de surveillance Tf étant défini comme le délai au-delà de ce qui correspond à une contention, et le dépassement de ce délai de surveillance Tf correspondant alors à une application logicielle avionique 14 hors contrôle.

La durée du délai de surveillance prédéfini Tf est du même ordre de grandeur que celle des premier et deuxième délais d'exécution T1 et T2, typiquement comprise entre la durée du premier délai d'exécution T1 et celle du deuxième délai d'exécution T2. Dans le cas où la durée du délai de surveillance prédéfini Tf est supérieure à celle du deuxième délai d'exécution T2, il n'y aura pas de distinction entre une contention aboutissant à un statut « hors sécurité » et une application « hors contrôle » à l'expiration du deuxième délai d'exécution T2.

L'homme du métier observera que la détermination des délais T1, T2 et Tf dépend du contexte d'utilisation, des applications logicielles avioniques et de la caractérisation faite sur le processeur correspondant de la plateforme 16, le processeur étant de préférence un processeur multi-cœurs. La manière de déterminer ces seuils n'influence pas le procédé de surveillance objet de l'invention, pour lequel ces seuils sont des paramètres d'entrée.

A titre d'exemple de détermination des délais T1, T2 et Tf, à chaque application logicielle avionique 14 installée, qui a fait l'objet d'une qualification séparée, est associée une ou plusieurs valeurs WCET correspondant à des chaines fonctionnelles pour lesquelles des garanties doivent être fournies dans le cadre de la certification.

La caractérisation du processeur multi-cœurs faite à partir d'analyses et de mesures dans des conditions théoriques de pire cas permet alors d'obtenir :

- un ratio garanti entre une durée d'exécution dans un contexte où un seul cœur est utilisé et une durée d'exécution dans un contexte où l'ensemble des cœurs du processeur est employé dans son domaine d'usage ;
- une marge complémentaire, afin de garantir un fonctionnement plus sûr de l'application logicielle avionique 14 (à appliquer par exemple sur les durées de pire cas pour assurer, au moins pour les applications les plus critiques, l'absorption de contentions qui auraient échappé à la démarche de caractérisation) ; et
- une marge maximale au-delà de laquelle il sera considéré qu'une durée d'exécution ne résulte plus d'une contention, mais d'une erreur ou d'un plantage de l'application logicielle avionique 14.

Pour chaque chaine fonctionnelle surveillée par le dispositif et le procédé de surveillance objets de l'invention, les délais T1, T2 et Tf sont alors par exemple prédéfinis selon les formules suivantes, avec une origine temporelle correspondant au début d'exécution de l'application logicielle avionique 14 dans un créneau (de l'anglais *slot*) temporel alloué :

$$T1 = WCET \ x \ ratio \ garanti \qquad (1)$$

$$T2 = T1 \ x \ marge \ complémentaire \qquad (2)$$

$$Tf = T1 \ x \ marge \ maximale \qquad (3)$$

L'homme du métier notera en outre que la caractérisation du processeur peut aboutir à plusieurs jeux de paramètres correspondant à des usages différents du processeur (par exemple, usage « calcul », usage « entrées-sorties », ...), et les délais T1, T2 et Tf sont alors prédéfinis en fonction de ces usages variés.

Le fonctionnement du dispositif de surveillance 24 selon l'invention va désormais être expliqué à l'aide de la figure 2 représentant un organigramme du procédé, selon l'invention, de surveillance d'une application logicielle avionique 14 apte à être exécutée sur la plateforme 16, le procédé étant mis en œuvre par le dispositif électronique de surveillance 24.

Lors d'une étape 100, le dispositif de surveillance 24 surveille, via son premier module de surveillance 26, la durée d'exécution de l'application logicielle avionique 14 correspondante. Cette étape de surveillance 100 comporte la vérification, à l'expiration d'au moins un délai d'exécution prédéfini T1, T2, de l'achèvement de l'exécution d'au moins un traitement logiciel de l'application logicielle avionique 14.

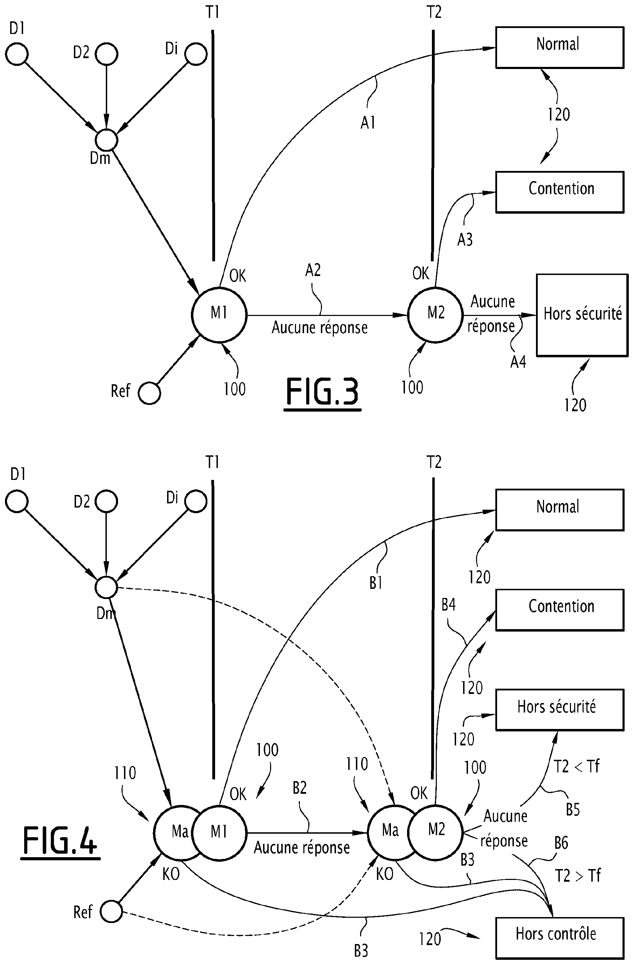

Cette étape de surveillance 100 comporte une première vérification M1, à l'expiration du premier délai d'exécution prédéfini T1, de l'achèvement de l'exécution d'au moins un traitement logiciel de l'application logicielle avionique 14, comme représenté sur la figure 3.

Lorsque l'exécution d'au moins un traitement logiciel de l'application logicielle avionique 14 n'est pas achevée à l'expiration du premier délai d'exécution prédéfini T1, l'étape de surveillance 100 comporte de préférence en outre une deuxième vérification M2, à l'expiration du deuxième délai d'exécution prédéfini T2, de l'achèvement de l'exécution d'au moins un traitement logiciel de l'application logicielle avionique 14.

La première vérification M1 vise à diagnostiquer un dépassement du premier délai d'exécution prédéfini T1, pour un ou plusieurs traitements logiciels correspondants ou pour l'application logicielle avionique 14 dans son ensemble, ce dépassement n'impliquant pas un problème de sécurité.

L'objectif de la première vérification M1 est de surveiller le temps d'exécution d'une application logicielle avionique 14 par rapport à un temps normal, établi dans le respect de règles de la plateforme, c'est-à-dire par rapport à un domaine d'usage de l'application logicielle avionique 14. La première vérification M1 se fait à l'expiration du premier délai d'exécution prédéfini T1, date à laquelle l'exécution de l'application logicielle avionique 14, ou du ou des traitements logiciels associés surveillés, est normalement achevée, de sorte qu'un dépassement de cette durée d'exécution est interprétable comme une contention, si l'application n'est pas hors contrôle. Le premier délai d'exécution prédéfini T1 prend en compte les effets sur le temps d'exécution identifiés au titre des contentions multi-cœur, généralement présentés dans un guide utilisateur de la plateforme 16 et qualifiés avec la plateforme 16.

Si pour un traitement logiciel ou pour l'application logicielle avionique 14 dans son ensemble, le premier délai d'exécution prédéfini T1 est dépassé, le dispositif de surveillance 24 considère alors que l'application logicielle avionique 14 a subi une contention supérieure à la normale, mais qu'elle est apte à fonctionner sainement jusqu'au deuxième délai d'exécution prédéfini T2.

En cas de dépassement du premier délai d'exécution prédéfini T1 pour un traitement logiciel ou pour l'application logicielle avionique 14 dans son ensemble, le dispositif de surveillance 24 comptabilise de préférence en outre l'événement via un premier compteur nbM1 dédié, pour générer une action complémentaire prédéfinie si le nombre de ces dépassements dépasse un seuil prédéfini, exprimé par exemple en nombre de contentions observées dans un intervalle de temps prédéfini. L'action complémentaire prédéfinie est typiquement le délestage de la plateforme 16 en arrêtant une application logicielle avionique 14 parmi les applications logicielles avioniques 14 les moins critiques.

La deuxième vérification M2 vise à diagnostiquer un dépassement du deuxième délai d'exécution prédéfini T2, pour un ou plusieurs traitements logiciels correspondants ou pour l'application logicielle avionique 14 dans son ensemble, ce dépassement indiquant un risque de sécurité. Comme indiqué précédemment, le deuxième délai d'exécution prédéfini T2 est strictement supérieur au premier délai d'exécution prédéfini T1.

L'objectif de la deuxième vérification M2 est de forcer une décision à une date où le dispositif de surveillance 24 ne peut plus attendre la fin d'exécution de l'application logicielle avionique 14 et/ou de ses traitements logiciels correspondants, soit parce que la durée allouée à l'application logicielle avionique 14 est échue, soit parce qu'au-delà de ce deuxième délai d'exécution prédéfini T2, l'application logicielle avionique 14 entre dans un domaine où la sécurité n'est plus garantie. Le deuxième délai d'exécution prédéfini T2 est inférieur ou égal à la durée allouée à l'application logicielle avionique 14 pour son exécution globale.

L'homme du métier observera en outre qu'à chaque première vérification M1 n'est pas nécessairement associée une deuxième vérification M2 respective, une même deuxième vérification M2 étant par exemple associée à plusieurs premières vérifications M1. Il est en effet possible de surveiller plusieurs traitements logiciels d'une application logicielle avionique 14, donc d'avoir plusieurs premières vérifications M1 respectives, tout en effectuant une unique deuxième vérification M2 pour l'application logicielle avionique 14 dans son ensemble. En variante, lorsque l'application logicielle avionique 14 se décompose en plusieurs traitements logiciels, plusieurs groupes de première et deuxième vérifications M1, M2 sont définissables.

En cas de dépassement du deuxième délai d'exécution prédéfini T2 pour un traitement logiciel ou pour l'application logicielle avionique 14 dans son ensemble, le dispositif de surveillance 24 redémarre l'application logicielle avionique 14. Dans ce cas, le dispositif de surveillance 24 comptabilise de préférence en outre l'événement via un deuxième compteur nbM2 dédié.

Selon le deuxième mode de réalisation de l'invention, le dispositif de surveillance 24 surveille en outre, lors de l'étape 110, via son deuxième module de surveillance 28, le comportement de l'application logicielle avionique 14. Cette deuxième étape de surveillance 110 comporte la vérification Ma, à l'expiration du délai de surveillance prédéfini Tf, de la détection d'au moins un évènement applicatif de l'application logicielle avionique 14, comme représenté sur la figure 4.

La vérification Ma vise à diagnostiquer un fonctionnement « hors contrôle » de l'application logicielle avionique 14, c'est-à-dire qui n'est pas sain.

Selon le deuxième mode de réalisation de l'invention, le but est d'éviter qu'une application logicielle avionique 14 « hors contrôle » déclenche des actions de surveillance précitées au titre de contentions et de manière erronée. En effet, un déclenchement intempestif du dispositif de surveillance 24 pourrait amener à la perte d'applications logicielles avioniques 14 du fait d'un mauvais comportement d'autres applications logicielles avioniques 14, ce qui n'est pas acceptable.

Le fonctionnement d'une application logicielle avionique 14 est considéré correct par deuxième module de surveillance 28, par exemple lorsqu'au moins un des évènements suivants est vérifié :

- les processus selon la norme ARINC 653 de l'application sont terminés avant le délai de surveillance prédéfini Tf,
- l'application logicielle avionique 14 a exécuté une tâche de surveillance particulière, significative de sa bonne santé, et donné une réponse adéquate.

A titre d'exemple, l'application logicielle avionique 14 doit exécuter une série de calculs dans le temps pour lesquels le résultat est connu, mais n'existe pas dans les variables gérées par l'application logicielle avionique 14. L'annonce du résultat global est fournie au deuxième module de surveillance 28 en temps utile, par exemple dans le cadre du WCET surveillé. Ces calculs peuvent en outre varier d'une période à une autre selon un plan connu de façon à éviter le blocage applicatif sur un résultat bon, sans que l'application logicielle avionique 14 l'ait recalculé à chaque période.

Le deuxième module de surveillance 28 considère alors l'application logicielle avionique 14 comme « hors contrôle » si :

- soit un ou plusieurs traitements logiciels n'ont pas été exécutés avant le délai de surveillance prédéfini Tf,
- soit l'application logicielle avionique 14 n'a pas fourni la bonne réponse lors de cette deuxième étape de surveillance 110.

Lorsque l'application logicielle avionique 14 est considérée « hors contrôle » à l'expiration du délai de surveillance prédéfini Tf, le dispositif de surveillance 24 arrête ladite application logicielle avionique 14 et la redémarre indépendamment des autres surveillances éventuelles.

Selon le deuxième mode de réalisation de l'invention, l'homme du métier comprendra que la vérification Ma est corrélée aux première et deuxième vérifications M1, M2, comme représenté sur la figure 4, puisque la vérification Ma ne peut pas être établie si l'application logicielle avionique 14 n'a pas terminé son activité à cause d'une contention, et inversement la première ou deuxième vérification M1, M2 ne peut pas être établie si l'application logicielle avionique 14 est hors contrôle, et ne répond alors pas.

Le procédé de surveillance comporte, lors de l'étape suivante 120, la mise à jour du statut de l'application logicielle avionique 14.

Selon le premier mode de réalisation, visible à la figure 3, la mise à jour 120 du statut de l'application logicielle avionique 14 dépend de la surveillance 100 de la durée d'exécution de l'application logicielle avionique 14.

Lors de l'étape de mise à jour du statut 120, le statut de l'application logicielle avionique 14 est, comme représenté par la flèche A1 à la figure 3, positionné à « normal » lorsque l'achèvement de l'exécution du ou des traitements logiciels correspondants de l'application logicielle avionique 14 a été détecté avant l'expiration du premier délai d'exécution prédéfini T1, c'est-à-dire avant l'expiration de chaque délai d'exécution prédéfini T1, T2, le deuxième délai d'exécution prédéfini T2 étant strictement supérieur au premier délai d'exécution prédéfini T1.

Lorsque l'achèvement de l'exécution du ou des traitements logiciels correspondants de l'application logicielle avionique 14 n'a pas été détecté avant l'expiration du premier délai d'exécution prédéfini T1 lors de la première vérification M1, comme représenté par la flèche A2 à la figure 3, le premier module de surveillance 26 effectue la deuxième vérification M2.

Lors de l'étape de mise à jour du statut 120, le statut de l'application logicielle avionique 14 est alors positionné à « contention » lorsque l'achèvement de l'exécution du ou des traitements logiciels correspondants de l'application logicielle avionique 14 a été détecté après l'expiration du premier délai d'exécution prédéfini T1 et avant l'expiration du deuxième délai d'exécution prédéfini T2, comme représenté par la flèche A3 à la figure 3.

Le statut de l'application logicielle avionique 14 est positionné à « hors sécurité » lorsque l'achèvement de l'exécution du ou des traitements logiciels correspondants de l'application logicielle avionique 14 n'a pas été détecté après l'expiration du ou de chaque délai d'exécution prédéfini T1, T2, comme représenté par la flèche A4 à la figure 3.

Selon le deuxième mode de réalisation, visible à la figure 4, la mise à jour 120 du statut de l'application logicielle avionique 14 dépend à la fois de la surveillance 100 de la durée d'exécution de l'application logicielle avionique 14 et de la surveillance 110 du comportement de l'application logicielle avionique 14.

Lors de cette étape de mise à jour du statut 120, le statut de l'application logicielle avionique 14 est, comme représenté par la flèche B1 à la figure 4, positionné à « normal » lorsque l'achèvement de l'exécution du ou des traitements logiciels correspondants de l'application logicielle avionique 14 a été détecté avant l'expiration du premier délai d'exécution prédéfini T1, c'est-à-dire avant l'expiration de chaque délai d'exécution prédéfini T1, T2, et lorsque le ou les évènements applicatifs corrects ont été détectés avant l'expiration du délai de surveillance prédéfini Tf.

Lorsque l'achèvement de l'exécution du ou des traitements logiciels correspondants de l'application logicielle avionique 14 n'a pas été détecté avant l'expiration du premier délai d'exécution prédéfini T1 lors de la première vérification M1 et lorsque l'application logicielle avionique 14 n'est pas considérée comme « hors contrôle », le premier module de surveillance 26 effectue la deuxième vérification M2, comme représenté par la flèche B2 à la figure 4.

Lors de l'étape de mise à jour du statut 120, le statut de l'application logicielle avionique 14 est positionné à « hors-contrôle » lorsqu'aucun évènement applicatif n'a été détecté à l'expiration du délai de surveillance prédéfini Tf ou bien lorsque l'événement applicatif détecté est incorrect, comme représenté par la flèche B3 à la figure 4.

Le statut de l'application logicielle avionique 14 est positionné à « contention » lorsque l'achèvement de l'exécution du ou des traitements logiciels correspondants de l'application logicielle avionique 14 a été détecté après l'expiration du premier délai d'exécution prédéfini T1 et avant l'expiration du deuxième délai d'exécution prédéfini T2, et lorsque le ou les évènements applicatifs corrects ont été détectés avant l'expiration du délai de surveillance prédéfini Tf, comme représenté par la flèche B4 à la figure 4.

Le statut de l'application logicielle avionique 14 est positionné à « hors sécurité » lorsque l'achèvement de l'exécution du ou des traitements logiciels correspondants de l'application logicielle avionique 14 n'a pas été détecté après l'expiration du ou de chaque délai d'exécution prédéfini T1, T2 et lorsque le ou les évènements applicatifs corrects ont été détectés avant l'expiration du délai de surveillance prédéfini Tf, comme représenté par la flèche B5 à la figure 4.

Lorsque l'achèvement de l'exécution du ou des traitements logiciels correspondants de l'application logicielle avionique 14 n'a pas été détecté après l'expiration du ou de chaque délai d'exécution prédéfini T1, T2, et lorsqu'aucun évènement applicatif n'a été détecté à l'expiration du délai de surveillance prédéfini Tf ou bien l'événement applicatif détecté est incorrect, le statut de l'application logicielle avionique 14 est, lors de l'étape de mise à jour du statut 120, positionné à «hors sécurité » si chaque délai d'exécution prédéfini T1, T2 est inférieur ou égal au délai de surveillance prédéfini Tf, en particulier si le deuxième délai d'exécution prédéfini T2 est inférieur ou égal au délai de surveillance prédéfini Tf, comme représenté par la flèche B5 à la figure 4.

Sinon, c'est-à-dire si chaque délai d'exécution prédéfini T1, T2 est supérieur au délai de surveillance prédéfini Tf, en particulier si le deuxième délai d'exécution prédéfini T2 est supérieur au délai de surveillance prédéfini Tf, et que l'achèvement de l'exécution du ou des traitements logiciels correspondants de l'application logicielle avionique 14 n'a pas été détecté après l'expiration du ou de chaque délai d'exécution prédéfini T1, T2, aucun évènement applicatif n'ayant en outre été détecté à l'expiration du délai de surveillance prédéfini Tf ou bien l'événement applicatif détecté étant incorrect, le statut de l'application logicielle avionique 14 est alors positionné à « hors-contrôle », comme représenté par la flèche B6 à la figure 4.

Le procédé et le dispositif de surveillance 24 selon l'invention permettent alors de déterminer plus précisément le statut de l'application logicielle avionique 14, en fonction de la surveillance de la durée d'exécution de l'application logicielle avionique 14, voire selon le deuxième mode de réalisation en fonction en outre de la surveillance du comportement de l'application logicielle avionique 14.

On conçoit ainsi que le procédé et le dispositif de surveillance 24 selon l'invention permettent de surveiller plus efficacement l'application logicielle 14.

**Revendications**

1. Procédé de surveillance d'une application logicielle avionique (14) apte à être exécutée sur une plateforme (16) hébergeant un système d'exploitation (20), l'application logicielle avionique (14) comportant un ou plusieurs traitements logiciels à exécuter, la plateforme (16) étant destinée à être embarquée à bord d'un aéronef, le procédé étant mis en œuvre par un dispositif électronique de surveillance (24) et comprenant les étapes suivantes :

   - la surveillance (100) de la durée d'exécution de l'application logicielle avionique (14), via la vérification, à l'expiration d'un premier délai d'exécution prédéfini (T1), puis à l'expiration d'un deuxième délai d'exécution prédéfini (T2), de l'achèvement de l'exécution d'au moins un traitement logiciel de l'application logicielle avionique (14), le deuxième délai d'exécution prédéfini (T2) étant strictement supérieur au premier délai d'exécution prédéfini (T1) ; et
   - la mise à jour (120) d'un statut de l'application logicielle avionique (14) en fonction de la surveillance (100) de la durée d'exécution de l'application logicielle avionique (14),

   lors de l'étape de mise à jour du statut (120), le statut de l'application logicielle avionique (14) est positionné à « contention » lorsque l'achèvement de l'exécution du ou des traitements logiciels correspondants de l'application logicielle avionique (14) a été détecté après l'expiration du premier délai d'exécution prédéfini (T1) et avant l'expiration du deuxième délai d'exécution prédéfini (T2).

2. Procédé selon la revendication 1, dans lequel, lors de l'étape de mise à jour du statut (120) :

   + le statut de l'application logicielle avionique (14) est positionné à « normal » lorsque l'achèvement de l'exécution du ou des traitements logiciels correspondants de l'application logicielle avionique (14) a été détecté avant l'expiration du ou de chaque délai d'exécution prédéfini (T1, T2) ; et
   + le statut de l'application logicielle avionique (14) est positionné à « hors sécurité » lorsque l'achèvement de l'exécution du ou des traitements logiciels correspondants de l'application logicielle avionique (14) n'a pas été détecté après l'expiration du ou de chaque délai d'exécution prédéfini (T1, T2).

3. Procédé de surveillance d'une application logicielle avionique (14) apte à être exécutée sur une plateforme (16) hébergeant un système d'exploitation (20), l'application logicielle avionique (14) comportant un ou plusieurs traitements logiciels à exécuter, la plateforme (16) étant destinée à être embarquée à bord d'un aéronef, le procédé étant mis en œuvre par un dispositif électronique de surveillance (24) et comprenant les étapes suivantes :

- la surveillance (100) de la durée d'exécution de l'application logicielle avionique (14), via la vérification, à l'expiration d'un premier délai d'exécution prédéfini (T1), puis à l'expiration d'un deuxième délai d'exécution prédéfini (T2), de l'achèvement de l'exécution d'au moins un traitement logiciel de l'application logicielle avionique (14), le deuxième délai d'exécution prédéfini (T2) étant strictement supérieur au premier délai d'exécution prédéfini (T1) ;
- la surveillance (110) du comportement de l'application logicielle avionique (14), via la vérification, à l'expiration d'un délai de surveillance prédéfini (Tf), de la détection d'au moins un évènement applicatif de l'application logicielle avionique (14) ; et
- la mise à jour (120) d'un statut de l'application logicielle avionique (14) en fonction de la surveillance (100) de la durée d'exécution de l'application logicielle avionique (14) et de la surveillance (110) du comportement de l'application logicielle avionique (14), et

lors de l'étape de mise à jour du statut (120), le statut de l'application logicielle avionique (14) est positionné à « contention » lorsque l'achèvement de l'exécution du ou des traitements logiciels correspondants de l'application logicielle avionique (14) a été détecté après l'expiration du premier délai d'exécution prédéfini (T1) et avant l'expiration du deuxième délai d'exécution prédéfini (T2), et lorsque le ou les évènements applicatifs corrects ont été détectés avant l'expiration du délai de surveillance prédéfini (Tf).

4. Procédé selon la revendication 3, dans lequel, lors de l'étape de mise à jour du statut (120) :

+ le statut de l'application logicielle avionique (14) est positionné à « normal » lorsque l'achèvement de l'exécution du ou des traitements logiciels correspondants de l'application logicielle avionique (14) a été détecté avant l'expiration du ou de chaque délai d'exécution prédéfini (T1, T2) et lorsque le ou les évènements applicatifs corrects ont été détectés avant l'expiration du délai de surveillance prédéfini (Tf) ; et
+ le statut de l'application logicielle avionique (14) est positionné à « hors sécurité » lorsque l'achèvement de l'exécution du ou des traitements logiciels correspondants de l'application logicielle avionique (14) n'a pas été détecté après l'expiration du ou de chaque délai d'exécution prédéfini (T1, T2) et lorsque le ou les évènements applicatifs corrects ont été détectés avant l'expiration du délai de surveillance prédéfini (Tf).

5. Procédé selon la revendication 3 ou 4, dans lequel, lors de l'étape de mise à jour du statut (120), le statut de l'application logicielle avionique (14) est positionné à « hors-contrôle » lorsqu'aucun évènement applicatif n'a été détecté à l'expiration du délai de surveillance prédéfini (Tf) ou bien lorsque l'événement applicatif détecté est incorrect.

6. Procédé selon l'une quelconque des revendications 3 à 5, dans lequel lorsque l'achèvement de l'exécution du ou des traitements logiciels correspondants de l'application logicielle avionique (14) n'a pas été détecté après l'expiration du ou de chaque délai d'exécution prédéfini (T1, T2), et lorsqu'aucun évènement applicatif n'a été détecté à l'expiration du délai de surveillance prédéfini (Tf) ou bien l'événement applicatif détecté est incorrect, le statut de l'application logicielle avionique (14) est, lors de l'étape de mise à jour du statut (120), positionné à « hors sécurité » si chaque délai d'exécution prédéfini (T1, T2) est inférieur au délai de surveillance prédéfini (Tf) et à « hors-contrôle » sinon.

7. Programme d'ordinateur comportant des instructions logicielles qui, lorsqu'elles sont exécutées par un ordinateur, mettent en œuvre un procédé selon l'une quelconque des revendications précédentes.

8. Dispositif électronique (24) de surveillance d'une application logicielle avionique (14) apte à être exécutée sur une plateforme (16) hébergeant un système d'exploitation (20), l'application logicielle avionique (14) comportant un ou plusieurs traitements logiciels à exécuter, la plateforme (16) étant destinée à être embarquée à bord d'un aéronef, le dispositif électronique de surveillance (24) comprenant :

- un module de surveillance (26) configuré pour surveiller la durée d'exécution de l'application logicielle avionique (14), via la vérification, à l'expiration d'un premier délai d'exécution prédéfini (T1), puis à l'expiration d'un deuxième délai d'exécution prédéfini (T2), de l'achèvement de l'exécution d'au moins un traitement logiciel de l'application logicielle avionique (14), le deuxième délai d'exécution prédéfini (T2) étant strictement supérieur au premier délai d'exécution prédéfini (T1) ; et
- un module de mise à jour (27) configuré pour mettre à jour un statut de l'application logicielle avionique (14)

en fonction de la surveillance de la durée d'exécution de l'application logicielle avionique (14),

le module de mise à jour (27) étant configuré pour positionner à « contention » le statut de l'application logicielle avionique (14) lorsque l'achèvement de l'exécution du ou des traitements logiciels correspondants de l'application logicielle avionique (14) a été détecté après l'expiration du premier délai d'exécution prédéfini (T1) et avant l'expiration du deuxième délai d'exécution prédéfini (T2).

**9.** Dispositif électronique (24) de surveillance d'une application logicielle avionique (14) apte à être exécutée sur une plateforme (16) hébergeant un système d'exploitation (20), l'application logicielle avionique (14) comportant un ou plusieurs traitements logiciels à exécuter, la plateforme (16) étant destinée à être embarquée à bord d'un aéronef, le dispositif électronique de surveillance (24) comprenant :

- un premier module de surveillance (26) configuré pour surveiller la durée d'exécution de l'application logicielle avionique (14), via la vérification, à l'expiration d'un premier délai d'exécution prédéfini (T1), puis à l'expiration d'un deuxième délai d'exécution prédéfini (T2), de l'achèvement de l'exécution d'au moins un traitement logiciel de l'application logicielle avionique (14), le deuxième délai d'exécution prédéfini (T2) étant strictement supérieur au premier délai d'exécution prédéfini (T1),
- un deuxième module de surveillance (28) configuré pour surveiller le comportement de l'application logicielle avionique (14), via la vérification, à l'expiration d'un délai de surveillance prédéfini (Tf), de la détection d'au moins un évènement applicatif de l'application logicielle avionique (14) ; et
- un module de mise à jour (27) configuré pour mettre à jour un statut de l'application logicielle avionique (14) en fonction de la surveillance de la durée d'exécution de l'application logicielle avionique (14) et de la surveillance (110) du comportement de l'application logicielle avionique (14),

le module de mise à jour (27) étant configuré pour positionner à « contention » le statut de l'application logicielle avionique (14) lorsque l'achèvement de l'exécution du ou des traitements logiciels correspondants de l'application logicielle avionique (14) a été détecté après l'expiration du premier délai d'exécution prédéfini (T1) et avant l'expiration du deuxième délai d'exécution prédéfini (T2), et lorsque le ou les évènements applicatifs corrects ont été détectés avant l'expiration du délai de surveillance prédéfini (Tf).

**10.** Système électronique avionique (10) comprenant :

- une mémoire (12) apte à stocker au moins une application logicielle avionique (14) ;
- une plateforme (16) apte à exécuter chaque application logicielle avionique (14), la plateforme (16) hébergeant un système d'exploitation (20) ; et
- un dispositif électronique (24) de surveillance de chaque application logicielle avionique (14), le dispositif électronique de surveillance (24) étant selon la revendication 8 ou 9.

**Patentansprüche**

**1.** Verfahren zum Überwachen einer flugtechnischen Softwareanwendung (14), die geeignet ist, auf einer ein Betriebssystem (20) aufnehmenden Plattform (16) ausgeführt zu werden, wobei die flugtechnischen Softwareanwendung (14) ein oder mehrere auszuführende Programmverarbeitungen aufweist, wobei die Plattform (16) vorgesehen ist, an Bord eines Luftfahrzeuges mitgeführt zu werden, wobei das Verfahren durch eine elektronische Überwachungsvorrichtung (24) ausgeführt wird und die folgenden Schritte umfasst:

- Überwachen (100) der Dauer der Ausführung der flugtechnischen Softwareanwendung (14) über die Überprüfung der Beendigung der Ausführung mindestens einer Programmverarbeitung der flugtechnischen Softwareanwendung bei dem Ablauf eines ersten vorbestimmten Ausführungszeitraums (T1), dann bei dem Ablauf eines zweiten vorbestimmten Ausführungszeitraums (T2), wobei der zweite vorbestimmte Ausführungszeitraum (T2) streng größer als der erste vorbestimmte Ausführungszeitraum (T1) ist; und
- Aktualisieren (120) eines Status der flugtechnischen Softwareanwendung (14) abhängig von der Überwachung (100) der Ausführungsdauer der flugtechnischen Softwareanwendung (14),

bei dem Schritt des Aktualisierens des Status (120) der Status der flugtechnischen Softwareanwendung (14) auf "Konkurrenzbetrieb" gesetzt wird, wenn die Beendigung der Ausführung der korrespondierenden Programmverarbeitung(en) der flugtechnischen Softwareanwendung (14) nach dem Ablauf des ersten vorbestimmten Ausführungszeitraums (T1) und vor dem Ablauf des zweiten vorbestimmten Ausführungszeitraums (T2) detektiert wurde.

2. Verfahren nach Anspruch 1, bei dem während des Schritts des Aktualisierens des Status (120):

+ der Status der flugtechnischen Softwareanwendung (14) auf "normal" gesetzt wird, wenn die Beendigung der Ausführung der korrespondierenden Programmverarbeitung(en) der flugtechnischen Softwareanwendung (14) vor dem Ablauf des oder jedes vorbestimmten Ausführungszeitraums (T1, T2) detektiert wurde; und
+ der Status der flugtechnischen Softwareanwendung (14) auf "außerhalb Sicherheit" gesetzt wird, wenn die Beendigung der Ausführung der korrespondierenden Programmverarbeitung(en) der Softwareanwendung (14) nicht nach dem Ablauf des oder jedes vorbestimmten Ausführungszeitraums (T1, T2) detektiert wurde.

3. Verfahren zum Überwachen einer flugtechnischen Softwareanwendung (14), die geeignet ist, auf einer ein Betriebssystem (20) aufnehmenden Plattform (16) ausgeführt zu werden, wobei die flugtechnischen Softwareanwendung (14) ein oder mehrere auszuführende Programmverarbeitungen aufweist, wobei die Plattform (16) vorgesehen ist, an Bord eines Luftfahrzeuges mitgeführt zu werden, wobei das Verfahren durch eine elektronische Überwachungsvorrichtung (24) ausgeführt wird und die folgenden Schritte umfasst:

- Überwachen (100) der Dauer der Ausführung der flugtechnischen Softwareanwendung (14) über die Überprüfung der Beendigung der Ausführung mindestens einer Programmverarbeitung der flugtechnischen Softwareanwendung bei dem Ablauf eines ersten vorbestimmten Ausführungszeitraums (T1), dann bei dem Ablauf eines zweiten vorbestimmten Ausführungszeitraums (T2), wobei der zweite vorbestimmte Ausführungszeitraum (T2) streng größer als der erste vorbestimmte Ausführungszeitraum (T1) ist;
- Überwachen (110) des Verhaltens der flugtechnischen Softwareanwendung (14) über die Überprüfung der Detektion mindestens eines Anwendungsereignisses der flugtechnischen Softwareanwendung (14) bei Ablauf eines vorbestimmten Überwachungszeitraums (Tf); und
- Aktualisieren (120) eines Status der flugtechnischen Softwareanwendung (14) abhängig von der Überwachung (100) der Ausführungsdauer der flugtechnischen Softwareanwendung (14) und der Überwachung (110) des Verhaltens der flugtechnischen Softwareanwendung (14), und

bei dem Schritt des Aktualisierens des Status (120) der Status der flugtechnischen Softwareanwendung (14) auf "Konkurrenzbetrieb" gesetzt wird, wenn die Beendigung der Ausführung der korrespondierenden Programmverarbeitung(en) der flugtechnischen Softwareanwendung (14) nach dem Ablauf des ersten vorbestimmten Ausführungszeitraums (T1) und vor dem Ablauf des zweiten vorbestimmten Ausführungszeitraums (T2) detektiert wurde, und wenn das oder die korrekten Anwendungsereignisse vor dem Ablauf des vorbestimmten Überwachungszeitraums (Tf) detektiert wurden.

4. Verfahren nach Anspruch 1, bei dem während des Schritts des Aktualisierens des Status (120):

+ der Status der flugtechnischen Softwareanwendung (14) auf "normal" gesetzt wird, wenn die Beendigung der Ausführung der korrespondierenden Programmverarbeitung(en) der flugtechnischen Softwareanwendung (14) vor dem Ablauf des oder jedes vorbestimmten Ausführungszeitraums (T1, T2) detektiert wurde, und wenn das oder die korrekten Anwendungsereignisse vor dem Ablauf des vorbestimmten Überwachungszeitraums (Tf) detektiert wurden; und
+ der Status der flugtechnischen Softwareanwendung (14) auf "außerhalb Sicherheit" gesetzt wird, wenn die Beendigung der Ausführung der korrespondierenden Programmverarbeitung(en) der Softwareanwendung (14) nicht nach dem Ablauf des oder jedes vorbestimmten Ausführungszeitraums (T1, T2) detektiert wurde und wenn das oder die korrekten Anwendungsereignisse vor dem Ablauf des vorbestimmten Überwachungszeitraums (Tf) detektiert wurden.

5. Verfahren nach Anspruch 3 oder 4, bei dem während des Schritts des Aktualisierens des Status (120) der Status der flugtechnischen Softwareanwendung (14) "außer Kontrolle" gesetzt wird, wenn kein Anwendungsereignis beim Ablauf des vorbestimmten Überwachungszeitraums (Tf) detektiert wurde, oder auch wenn das detektierte Anwendungsereignis nicht korrekt ist.

6. Verfahren nach einem beliebigen der Ansprüche 3 bis 5, bei dem, wenn die Beendigung der Ausführung der korrespondierenden Programmverarbeitung(en) der flugtechnischen Softwareanwendung (14) nicht nach Ablauf des oder jedes vorbestimmten Ausführungszeitraums (T1, T2) detektiert wurde und wenn kein Anwendungsereignis bei Ablauf des bestimmten Überwachungszeitraum (Tf) detektiert wurde oder auch das Anwendungsereignis nicht korrekt detektiert wurde, der Status der flugtechnischen Softwareanwendung (14) bei dem Schritt des Aktualisierens des Status (120) auf "außerhalb Sicherheit", wenn jeder vorbestimmte Ausführungszeitraum (T1, T2) kleiner ist als der vorbestimmte Überwachungszeitraum (Tf), und wenn nicht auf "außer Kontrolle" gesetzt wird.

7. Computerprogramm, das Softwarebefehle aufweist, die wenn sie von einem Computer ausgeführt werden, ein Verfahren nach einem beliebigen der vorhergehenden Ansprüche durchführen.

8. Elektronische Vorrichtung (24) zur Überwachung einer flugtechnischen der Anwendung (14), die geeignet ist, auf einer ein Betriebssystem (20) aufnehmenden Plattform (16) ausgeführt zu werden, wobei die flugtechnischen Softwareanwendung (14) ein oder mehrere auszuführende Programmverarbeitungen aufweist, wobei die Plattform (16) vorgesehen ist, an Bord eines Luftfahrzeuges mitgeführt zu werden,
wobei die elektronische Überwachungsvorrichtung (24) aufweist:

- ein Überwachungsmodul (26), das ausgebildet ist, die Dauer der Ausführung der flugtechnischen Softwareanwendung (14) über die Überprüfung der Beendigung der Ausführung mindestens einer Programmverarbeitung der flugtechnischen Softwareanwendung bei dem Ablauf eines ersten vorbestimmten Ausführungszeitraums (T1), dann bei dem Ablauf eines zweiten vorbestimmten Ausführungszeitraums (T2) zu überwachen, wobei der zweite vorbestimmte Ausführungszeitraum (T2) streng größer als der erste vorbestimmte Ausführungszeitraum (T1) ist; und
- ein Aktualisierungsmodul (27), das ausgebildet ist, einen Status der flugtechnischen Softwareanwendung (14) abhängig von der Überwachung der Ausführungsdauer der flugtechnischen Softwareanwendung (14) zu aktualisieren,

wobei das Aktualisierungsmodul (27) ausgebildet ist, den Status der flugtechnischen Softwareanwendung (14) auf "Konkurrenzbetrieb" zu setzen, wenn die Beendigung der Ausführung der korrespondierenden Programmverarbeitung(en) der flugtechnischen Softwareanwendung (14) nach dem Ablauf des ersten vorbestimmten Ausführungszeitraums (T1) und vor dem Ablauf des zweiten vorbestimmten Ausführungszeitraums (T2) detektiert wurde.

9. Elektronische Vorrichtung (24) zur Überwachung einer flugtechnischen Softwareanwendung (14), die geeignet ist, auf einer ein Betriebssystem (20) aufnehmenden Plattform (16) ausgeführt zu werden, wobei die flugtechnischen Softwareanwendung (14) ein oder mehrere auszuführende Programmverarbeitungen aufweist, wobei die Plattform (16) vorgesehen ist, an Bord eines Luftfahrzeuges mitgeführt zu werden,
wobei die elektronische Überwachungsvorrichtung (24) umfasst:

- ein erstes Überwachungsmodul (26), das ausgebildet ist, die Dauer der Ausführung der flugtechnischen Softwareanwendung (14) über die Überprüfung der Beendigung der Ausführung mindestens einer Programmverarbeitung der flugtechnischen Softwareanwendung bei dem Ablauf eines ersten vorbestimmten Ausführungszeitraums (T1), dann bei dem Ablauf eines zweiten vorbestimmten Ausführungszeitraums (T2) zu überwachen, wobei der zweite vorbestimmte Ausführungszeitraum (T2) streng größer als der erste vorbestimmte Ausführungszeitraum (T1) ist;
- ein zweites Überwachungsmodul (28), das ausgebildet ist, das Verhalten der flugtechnischen Softwareanwendung (14) über die Überprüfung der Detektion mindestens eines Anwendungsereignisses der flugtechnischen Softwareanwendung (14) bei Ablauf eines vorbestimmten Überwachungszeitraums (Tf) zu überwachen; und
- ein Aktualisierungsmodul (27), das ausgebildet ist, einen Status der flugtechnischen Softwareanwendung (14) abhängig von der Überwachung der Ausführungsdauer der flugtechnischen Softwareanwendung (14) und der Überwachung (110) des Verhaltens der flugtechnischen Softwareanwendung (14) zu aktualisieren, und

das Aktualisierungsmodul ausgebildet ist, den Status der flugtechnischen Softwareanwendung (14) auf "Konkurrenzbetrieb" zu setzen, wenn die Beendigung der Ausführung der korrespondierenden Programmverarbeitung(en) der flugtechnischen Softwareanwendung (14) nach dem Ablauf des ersten vorbestimmten Ausführungszeitraums (T1) und vor dem Ablauf des zweiten vorbestimmten Ausführungszeitraums (T2) detektiert wurde, und wenn das oder die korrekten Anwendungsereignisse vor dem Ablauf des vorbestimmten Überwachungszeitraums (Tf) detektiert wurden.

10. Elektronisches flugtechnisches System (10) umfassend:

- einen Speichervorrichtung (12), die geeignet ist, mindestens eine flugtechnische Softwareanwendung (14) zu speichern;
- eine Plattform (16), die geeignet ist, jede flugtechnische Softwareanwendung (14) auszuführen, wobei die Plattform (16) ein Betriebssystem (20) aufnimmt; und
- eine elektronische Vorrichtung (24) zur Überwachung jeder flugtechnischen Softwareanwendung (14), wobei die Überwachungsvorrichtung (24) nach Anspruch 8 oder 9 ausgebildet ist.

**Claims**

1. A method for monitoring an avionics software application (14), able to be executed on a platform (16) hosting an operating system (20), the avionics software application (14) comprising one or several software processing operations to be executed, the platform (16) being intended to be on board an aircraft, the method being implemented by an electronic monitoring device (24) and including the following steps:

   - monitoring (100) the execution duration of the avionics software application (14), through the verification, upon expiration of a first predefined execution time (T1), then upon expiration of a second predefined execution time (T2), of the completion of the execution of at least one software processing operation of the avionics software application (14), the second predefined execution time (T2) being strictly greater than the first predefined execution time (T1); and
   - updating (120) a status of the avionics software application (14) based on the monitoring (100) of the execution duration of the avionics software application (14),

   during the step for updating the status (120), the status of the avionics software application (14) is set at "contention" when the completion of the execution of the corresponding software processing operation(s) of the avionics software application (14) has been detected after the expiration of the first predefined execution time (T1) and before the expiration of the second predefined execution time (T2).

2. The method according to claiml, wherein, during the step for updating the status (120):

   + the status of the avionics software application (14) is set at "normal" when the completion of the execution of the corresponding software processing operation(s) of the avionics software application (14) has been detected before the expiration of the or each predefined execution time (T1, T2); and
   + the status of the avionics software application (14) is set at "non-secure" when the completion of the execution of the corresponding software processing operation(s) of the avionics software application (14) has not been detected after the expiration of the or each predefined execution time (T1, T2).

3. A method for monitoring an avionics software application (14), able to be executed on a platform (16) hosting an operating system (20), the avionics software application (14) comprising one or several software processing operations to be executed, the platform (16) being intended to be on board an aircraft, the method being implemented by an electronic monitoring device (24) and including the following steps:

   - monitoring (100) the execution duration of the avionics software application (14), through the verification, upon expiration of a first predefined execution time (T1), then upon expiration of a second predefined execution time (T2), of the completion of the execution of at least one software processing operation of the avionics software application (14), the second predefined execution time (T2) being strictly greater than the first predefined execution time (T1); and
   - monitoring (110) the behavior of the avionics software application (14), through the verification, upon expiration of a predefined monitoring period (Tf), of the detection of at least one application event of the avionics software application (14); and
   - updating (120) a status of the avionics software application (14) based on the monitoring (100) of the execution duration of the avionics software application (14) and on the monitoring (110) of the behavior of the avionics software application (14), and

   during the step for updating the status (120), the status of the avionics software application (14) is set at "contention" when the completion of the execution of the corresponding software processing operation(s) of the avionics software application (14) has been detected after the expiration of the first predefined execution time (T1) and before the expiration of the second predefined execution (T2) time, and when the correct application event(s) have been detected before the expiration of the predefined monitoring period (Tf).

**4.** The method according to claim 3, wherein, during the step for updating the status (120):

+ the status of the avionics software application (14) is set at "normal" when the completion of the execution of the corresponding software processing operation(s) of the avionics software application (14) has been detected before the expiration of the or each predefined execution time (T1, T2) and when the correct application event(s) have been detected before the expiration of the predefined monitoring period (Tf); and
+ the status of the avionics software application (14) is set at "non-secure" when the completion of the execution of the corresponding software processing operation(s) of the avionics software application (14) has not been detected after the expiration of the or each predefined execution time (T1, T2) and when the correct application event(s) have been detected before the expiration of the predefined monitoring period (Tf).

**5.** The method according to claim 3 or 4, wherein, during the step for updating the status (120), the status of the avionics software application (14) is set at "beyond control" when no application event has been detected upon expiration of the predefined monitoring period (Tf) or when the detected application event is incorrect.

**6.** The method according to any one of claims 3 to 5, wherein when the completion of the execution of the corresponding software processing operation(s) of the avionics software application (14) has not been detected after the expiration of the or each predefined execution time (T1, T2), and when no application event has been detected upon expiration of the predefined monitoring period (Tf) or the detected application event is incorrect, the status of the avionics software application (14) is, during the step for updating the status (120), set at "non-secure" if each predefined execution time (T1, T2) is shorter than the predefined monitoring period (Tf) and "beyond control" if not.

**7.** A computer program comprising software instructions which, when executed by a computer, carry out a method according to any one of the preceding claims.

**8.** An electronic monitoring device (24) for monitoring an avionics software application (14), able to be executed on a platform (16) hosting an operating system (20), the avionics software application (14) comprising one or several software processing operations to be executed, the platform (16) being intended to be on board an aircraft, the electronic monitoring device (24) comprising:

- a monitoring module (26) configured to monitor the execution duration of the avionics software application (14), through the verification, upon expiration of a first predefined execution time (T1), then upon expiration of a second predefined execution time (T2), of the completion of the execution of at least one software processing operation of the avionics software application (14), the second predefined execution time (T2) being strictly greater than the first predefined execution time (T1); and
- an update module (27) configured to update a status of the avionics software application (14) based on the monitoring of the execution duration of the avionics software application (14),

the update module (27) being configured to set the status of the avionics software application (14) at "contention" when the completion of the execution of the corresponding software processing operation(s) of the avionics software application (14) has been detected after the expiration of the first predefined execution time (T1) and before the expiration of the second predefined execution time (T2).

**9.** An electronic monitoring device (24) for monitoring an avionics software application (14), able to be executed on a platform (16) hosting an operating system (20), the avionics software application (14) comprising one or several software processing operations to be executed, the platform (16) being intended to be on board an aircraft, the electronic monitoring device (24) comprising:

- a first monitoring module (26) configured to monitor the execution duration of the avionics software application (14), through the verification, upon expiration of a first predefined execution time (T1), then upon expiration of a second predefined execution time (T2), of the completion of the execution of at least one software processing operation of the avionics software application (14), the second predefined execution time (T2) being strictly greater than the first predefined execution time (T1);
- a second monitoring module (28) configured to monitor the behavior of the avionics software application (14), through the verification, upon expiration of a predefined monitoring period (Tf), of the detection of at least one application event of the avionics software application (14); and
- an update module (27) configured to update a status of the avionics software application (14) based on the monitoring of the execution duration of the avionics software application (14) and on the monitoring (110) of the behavior of the avionics software application (14),

the update module (27) being configured to set the status of the avionics software application (14) at "contention" when the completion of the execution of the corresponding software processing operation(s) of the avionics software application (14) has been detected after the expiration of the first predefined execution time (T1) and before the expiration of the second predefined execution (T2) time, and when the correct application event(s) have been detected before the expiration of the predefined monitoring period (Tf).

**10.** An electronic avionics system (10), comprising:

- a memory (12) able to store at least one avionics software application (14);
- a platform (16) able to execute each avionics software application (14), the platform (16) hosting an operating system (20); and
- an electronic monitoring device (24) for monitoring each avionics software application (14), the electronic monitoring device (24) being according to claim 8 or 9.

## FIG.1

Surveillance de la durée d'exécution de l'application logicielle — 100

Surveillance du comportement de l'application logicielle — 110

Mise à jour d'un statut de l'application logicielle — 120

## FIG.2

**FIG.3**

**FIG.4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017024371 A1

- WO 2015173532 A1